# EUROPÄISCHE PATENTSCHRIFT

(11) **EP 4 441 408 B1**
(45) Veröffentlichungstag und Bekanntmachung des Hinweises auf die Patenterteilung: **20.05.2026**
(21) Anmeldenummer: 22822000.0
(22) Anmeldetag: 23.11.2022
(51) Int. Cl.: F16L 5/04, A62C 3/16, H02G 3/22, A62C 2/06

(54) **VORRICHTUNG ZUR DURCHFÜHRUNG VON LEITUNGEN, ROHREN UND/ODER KABELN DURCH EIN GEBÄUDEBAUTEIL**
DEVICE FOR FEEDING CONDUITS, PIPES AND / OR CABLES THROUGH A BUILDING COMPONENT
DISPOSITIF DE PASSAGE DE CONDUITES, DE TUBES ET/OU DE CÂBLES À TRAVERS UN COMPOSANT DE BÂTIMENT

(30) Priorität: 03.12.2021 EP 21212162
(43) Veröffentlichungstag der Anmeldung: 09.10.2024
(73) Patentinhaber: Hilti Aktiengesellschaft, 9494 Schaan (LI)
(72) Erfinder: VOSS, Brendan, 80798 München (DE); GOSLING, Eric, 86899 Landsberg am Lech (DE); STROIKE, Chad, Roanoke, Texas 76262 (US); PAETOW, Mario, 86899 Landsberg am Lech (DE); PRESCHL, Günter, 89077 Ulm (DE); MARKUS, Daniel, 86161 Augsburg (DE)
(74) Vertreter: Hilti Aktiengesellschaft Corporate Intellectual Property
(86) Internationale Anmeldenummer: PCT/EP2022/082989
(87) Internationale Veröffentlichungsnummer: WO 2023/099312

(56) Entgegenhaltungen:
- US-A1- 2007 125 018
- US-A1- 2008 128 998
- US-A1- 2018 264 298

## Beschreibung

### Technisches Gebiet

Die Erfindung betrifft Vorrichtungen zur Durchführung von Leitungen, Rohren und/oder Kabeln durch Gebäudebauteile, wie z.B. Gebäudewände und dergleichen, und Maßnahmen, um einen Durchtritt von Brandgasen und Rauch durch eine solche Vorrichtung zu verhindern.

### Technischer Hintergrund

Bekannte Vorrichtungen zur Durchführung von Leitungen, Rohren und/oder Kabeln durch Gebäudebauteile weisen in der Regel Maßnahmen auf, um eine gewünschte Rauchdichtigkeit, Brandgasdichtigkeit und optische Abdichtung bzw. Blickdichtigkeit zu erreichen. Hierzu ist es beispielsweise bekannt, Bürstenvorhänge oder Schlaufenvorhänge einzusetzen.

Eine gute Gasdichtigkeit ist insbesondere beim Einsatz der Vorrichtung bei Einrichtungen des Gesundheitswesens zwischen Räumen wichtig, um die Verbreitung von Krankheitserregern in der Luft zu verhindern. Auch beim Einsatz der Vorrichtung bei Rechenzentren ist die Gasdichtigkeit ein wichtiges Kriterium, da durch die Kontrolle des Luftstroms Temperaturverluste vermeidbar sind und eine gewünschte Wärmeregulierung erzielbar ist.

Aus der Druckschrift US 2018264298 A1 ist eine Leitungsdurchführung zur Durchführung von Leitungen und dergleichen durch ein Bauelement bekannt. Die Leitungsdurchführung weist einen rechteckigen Querschnitt mit Öffnungen an den Endbereichen auf. Im Bereich der Öffnungen der Leitungsdurchführung sind jeweils gekreuzte Bürsten angeordnet. In Längsrichtung innerhalb der gekreuzten Bürsten sind jeweils gebogene Schaumstoffelemente mit intumeszierendem Material angeordnet, wobei Endbereiche der Schaumstoffelemente an jeweils gegenüberliegenden Wänden der Leitungsdurchführung angeordnet sind. Zum Verschließen eines Durchgangs in Längsrichtung wirken die Schaumstoffelemente mit trapezförmigen Blöcken miteinander zusammen, die jeweils in einem mittigen Bereich der Schaumstoffelemente angeordnet sind.

Mit der in der US 2018264298 A1 offenbarten Ausführung ist gegebenenfalls eine gewünschte Gasdichtigkeit nicht erzielbar, da bei einer Beladung der Leitungsdurchführung mit Leitungen oder dergleichen im Bereich der trapezförmigen Blöcke eine unerwünscht geringe Abdichtung vorliegen kann, da lediglich verhältnismäßig wenig Material zur Abdichtung gegenüber den durch die Leitungsdurchführung geführten Leitungen zur Verfügung steht. Darüber hinaus wird durch das flexible Schaumstoffmaterial der Blöcke, das insbesondere zur Erzielung einer guten Dichtwirkung in beladenem Zustand der Leitungsdurchführung vorgesehen ist, in unbeladenem Zustand der Leitungsdurchführung gegebenenfalls eine unerwünscht geringe Dichtwirkung bei Zusammenwirken der Schaumstoffblöcke erzielt. Auch durch die gekreuzten Bürsten kann die Gasdichtigkeit der Leitungsdurchführung nicht in gewünschtem Umfang kompensiert werden.

Es ist Aufgabe der vorliegenden Erfindung, eine Vorrichtung zur Durchführung von Leitungen, Rohren und/oder Kabeln durch einen Gebäudeteil zur Verfügung zu stellen, bei der eine Gasdichtigkeit der Vorrichtung verbessert ist.

### Offenbarung der Erfindung

Diese Aufgabe wird durch die Vorrichtung zur Durchführung von Leitungen, Rohren und/oder Kabeln gemäß Anspruch 1 gelöst.

Weitere Ausgestaltungen sind in den abhängigen Ansprüchen angegeben.

Gemäß einem Aspekt der Erfindung ist eine Vorrichtung zur Durchführung von Leitungen, Rohren und/oder Kabeln durch einen Gebäudeteil vorgesehen, aufweisend ein Gehäuse mit einer Gehäusewand, wobei das Gehäuse einen von der Gehäusewand begrenzten, in Längsrichtung verlaufenden axialen Durchlasskanal aufweist, der an gegenüberliegenden Enden jeweils eine Öffnung aufweist, wobei das Gehäuse eine erste Wand und eine der ersten Wand gegenüberliegende zweite Wand aufweist, wobei im Gehäuseinneren eine erste Dichteinrichtung mit einer gebogenen Form angeordnet ist, deren Endbereiche jeweils mit der ersten Wand wirkverbunden sind und deren mittlerer Bereich sich in Richtung der zweiten Wand erstreckt, und wobei im Gehäuseinneren eine zweite Dichteinrichtung mit einer gebogenen Form angeordnet ist, deren Endbereiche mit der zweiten Wand wirkverbunden sind und deren mittlerer Bereich sich in Richtung der ersten Wand erstreckt, und wobei die erste Dichteinrichtung und die zweite Dichteinrichtung einen gemeinsamen Erstreckungsbereich in Längsrichtung der Vorrichtung aufweisen, wobei im Bereich der Öffnungen der Vorrichtung jeweils eine Dichtanordnung vorgesehen ist.

Erfindungsgemäß ist vorgesehen, dass die erste Dichteinrichtung und die zweite Dichteinrichtung mit den mittleren Bereichen miteinander zusammenwirken, wobei der ersten Dichteinrichtung im gemeinsamen Erstreckungsbereich eine dritte Dichteinrichtung und der zweiten Dichteinrichtung im gemeinsamen Erstreckungsbereich eine vierte Dichteinrichtung zugeordnet sind, und wobei die dritte Dichteinrichtung und die vierte Dichteinrichtung miteinander zusammenwirken.

Die vorliegende Lösung hat den Vorteil, dass eine Gasdichtigkeit beispielsweise gegenüber Brandgasen, Rauch aber auch gegenüber einem Luftaustausch gegenüber bekannten Ausführungen verbessert ist. Dies ist einerseits dadurch erzielt, dass die gebogenen, insbesondere plattenförmig ausgeführten ersten und zweiten Dichteinrichtungen direkt miteinander zusammenwirken und somit eine große Kontaktfläche zwischen der ersten Dichteinrichtung und der zweiten Dichteinrichtung zur Verfügung gestellt wird. Andererseits wird durch die im Bereich des gemeinsamen Erstreckungsbereichs vorgesehene dritte und vierte Dichteinrichtung eine Gasdichtigkeit sowohl in unbeladenem Zustand der Vorrichtung bzw. Leitungsdurchführung als auch in einem beispielsweise mit Leitungen, Rohren, Kabeln oder dergleichen beladenem Zustand verbessert.

Bei der erfindungsgemäßen Vorrichtung ist zudem kein manuelles Öffnen oder Schließen der Vorrichtung zur Durchführung von Leitungen, Rohren und/oder Kabeln durch die Vorrichtung erforderlich. Ein Gasdurchtritt durch die Vorrichtung ist dabei nicht nur in unbeladenem Zustand, sondern auch in teilbeladenem bzw. vollständig beladenem Zustand der Vorrichtung stark reduziert. Dies kann beispielsweise durch eine elastische und flexible Ausführung der ersten Dichteinrichtung und der zweiten Dichteinrichtung erreicht werden, die in unbeladenem Zustand aber auch in beladenem Zustand gegeneinandergedrückt werden und somit in diesem Bereich einen Gasdurchtritt reduzieren bzw. unterbinden.

Unter dem gemeinsamen Erstreckungsbereich wird ein in Längsrichtung der Vorrichtung weisender Bereich verstanden, der sich aus einer Schnittmenge eines in Längsrichtung der Vorrichtung erstreckenden Erstreckungsbereichs der ersten Dichteinrichtung und eines in Längsrichtung der Vorrichtung erstreckenden Erstreckungsbereichs der zweiten Dichteinrichtung ergibt. Vorzugsweise sind der gemeinsame Erstreckungsbereich und die Erstreckungsbereiche der Dichteinrichtungen im Wesentlichen identisch.

Darunter, dass der ersten Dichteinrichtung im gemeinsamen Erstreckungsbereich eine dritte Dichteinrichtung und der zweiten Dichteinrichtung im gemeinsamen Erstreckungsbereich eine vierte Dichteinrichtung zugeordnet sind, wird verstanden, dass die dritte Dichteinrichtung und die vierte Dichteinrichtung in Längsrichtung der Vorrichtung im gemeinsamen Erstreckungsbereich mit einem der ersten Dichteinrichtung bzw. der zweiten Dichteinrichtung zugewandten ersten Endbereich angeordnet sind. Es kann dabei vorgesehen sein, dass sich ein diesem ersten Endbereich abgewandter zweiter Endbereich der dritten Dichteinrichtung bzw. der vierten Dichteinrichtung in Längsrichtung der Vorrichtung außerhalb des Erstreckungsbereich befindet. Bevorzugt ist auch der zweite Endbereich der dritten Dichteinrichtung bzw. der vierten Dichteinrichtung in Längsrichtung der Vorrichtung innerhalb des gemeinsamen Erstreckungsbereichs angeordnet.

Die dritte Dichteinrichtung und die vierte Dichteinrichtung bilden jeweils insbesondere eine Dichtebene bzw. Dichtfläche, wobei die Dichtebene der dritten Dichteinrichtung und die Dichtebene der vierten Dichteinrichtung sowohl im Wesentlichen deckungsgleich sein können als auch einen Winkel vorzugsweise in Längsrichtung der Vorrichtung zueinander aufweisen können. Vorzugsweise ist vorgesehen, dass die dritte Dichteinrichtung gemeinsam mit der vierten Dichteinrichtung einen Querschnitt der Vorrichtung in unbeladenem Zustand der Vorrichtung nahezu vollständig oder vorzugsweise vollständig verschließt. Hierbei kann es vorgesehen sein, dass die einander zugewandten Enden der dritten Dichteinrichtung und der vierten Dichteinrichtung bzw. von Dichtelementen dieser Dichteinrichtungen bündig miteinander zusammenwirken oder beispielsweise kammartig ineinandergreifen.

Das Gehäuse der Vorrichtung nach der Erfindung weist vorzugsweise einen rechteckigen oder quadratischen Querschnitt auf. Die Vorrichtung weist vorzugsweise zwei Gehäuseteile auf, die miteinander in Wirkverbindung miteinander bringbar sind. Dabei kann es vorgesehen sein, dass jeder Gehäuseteil einen insbesondere U-förmigen Querschnitt aufweist.

Bei einer vorteilhaften Ausführung der Erfindung ist es vorgesehen, dass die dritte Dichteinrichtung und/oder die vierte Dichteinrichtung mit der ersten Dichteinrichtung bzw. mit der zweiten Dichteinrichtung verbunden ist. Hierdurch ist auf konstruktiv einfache Weise eine komplette Abdichtung des Querschnitts der Vorrichtung durch die dritte Dichteinrichtung und die vierte Dichteinrichtung erzielt. Zudem ist ein Zusammenbau vereinfacht, da die dritte Dichteinrichtung bzw. die vierte Dichteinrichtung vor einer Montage der ersten Dichteinrichtung bzw. der zweiten Dichteinrichtung an dem jeweiligen Gehäuseteil mit der jeweiligen Dichteinrichtung verbindbar ist.

Die dritte Dichteinrichtung und/oder die vierte Dichteinrichtung ist vorzugsweise mittels einer Klebeverbindung oder mittels einer Schweißverbindung mit der ersten Dichteinrichtung bzw. mit der zweiten Dichteinrichtung verbunden. Hierdurch kann eine sichere und zuverlässige Anbindung erzielt werden.

Es kann vorgesehen sein, dass die dritte Dichteinrichtung und/oder die vierte Dichteinrichtung mittels einer Halteeinrichtung mit der ersten Wand bzw. mit der zweiten Wand verbunden ist. Auf diese Weise ist eine flexible Positionierung und Ausrichtung der dritten Dichteinrichtung bzw. der vierten Dichteinrichtung erzielbar, wobei die Position und Ausrichtung der dritten Dichteinrichtung bzw. der vierten Dichteinrichtung sowohl bei beladenem als auch unbeladenem Zustand der Vorrichtung zumindest im Bereich der Anordnung an der jeweiligen Wand unverändert bleibt.

Bei einer vorteilhaften Weiterbildung der Erfindung ist es vorgesehen, dass die Halteeinrichtung zur Festlegung eines Endbereichs der ersten Dichteinrichtung bzw. der zweiten Dichteinrichtung an der ersten Wand bzw. zweiten Wand ausgeführt ist. Hierdurch wird die zur Festlegung eines Endbereichs der ersten Dichteinrichtung bzw. der zweiten Dichteinrichtung bereits vorgesehene Halteeinrichtung auch für die Anordnung der dritten Dichteinrichtung bzw. der vierten Dichteinrichtung verwendet und es ist kein separates Bauteil hierfür erforderlich. Zudem kann die dritte Dichteinrichtung bzw. die vierte Dichteinrichtung in einem Schritt mit der Festlegung des Endbereichs der ersten Dichteinrichtung bzw. der zweiten Dichteinrichtung an der Wand der Vorrichtung festgelegt werden.

Eine besonders gute Abdichtung der Vorrichtung ist erzielt, wenn der ersten Dichteinrichtung im gemeinsamen Erstreckungsbereich eine fünfte Dichteinrichtung und der zweiten Dichteinrichtung im gemeinsamen Erstreckungsbereich eine sechste Dichteinrichtung zugeordnet sind, wobei die fünfte Dichteinrichtung und die sechste Dichteinrichtung miteinander zusammenwirken. Vorzugsweise ist es vorgesehen, dass die fünfte und sechste Dichteinrichtung auf einer in Längsrichtung anderen Seite der mittleren Bereiche der ersten und zweiten Dichteinrichtung angeordnet sind als die dritte und die vierte Dichteinrichtung.

Bei einer vorteilhaften Ausführung der Erfindung können weitere Dichteinrichtungen vergleichbar zu der dritten bis sechsten Dichteinrichtung insbesondere in Längsrichtung der Vorrichtung versetzt zu den anderen Dichteinrichtungen vorgesehen sein, um eine Abdichtung weiter zu verbessern.

Es kann vorgesehen sein, dass die dritte Dichteinrichtung und/oder die vierte Dichteinrichtung und/oder die fünfte Dichteinrichtung und/oder die sechste Dichteinrichtung wenigstens zwei Dichtelemente aufweist, um insbesondere eine weiter verbesserte Abdichtung zu erzielen. Dichtebenen der einzelnen Dichtelemente können sowohl parallel zueinander angeordnet sein als auch einen Winkel zueinander aufweisen. Zudem können die Dichtebenen der einzelnen Dichtelemente senkrecht zur Längsrichtung der Vorrichtung angeordnet sein oder einen Winkel gegenüber der Längsrichtung aufweisen.

Bei einer zur Erzielung einer verbesserten Gasdichtigkeit vorteilhaften Ausführung der Erfindung weisen die dritte Dichteinrichtung und/oder die vierte Dichteinrichtung und/oder die fünfte Dichteinrichtung und/oder die sechste Dichteinrichtung jeweils insbesondere im Bereich der Anordnung an der ersten Dichteinrichtung bzw. der zweiten Dichteinrichtung umgeschlagene Dichtelemente auf, wobei die beiden Endbereiche der Dichtelemente bündig zueinander angeordnet sind.

Um eine Abdichtung in einem teilweise oder vollständig belegten Zustand der Vorrichtung zu verbessern, kann es vorgesehen sein, dass die dritte Dichteinrichtung und/oder die vierte Dichteinrichtung und/oder die fünfte Dichteinrichtung und/oder die sechste Dichteinrichtung jeweils insbesondere im Bereich der Anordnung an der ersten Dichteinrichtung bzw. der zweiten Dichteinrichtung umgeschlagene Dichtelemente aufweist, wobei die beiden Endbereiche der Dichtelemente einen Offset zueinander aufweisen. Alternativ hierzu kann es auch vorgesehen sein, dass zwei separate Dichtelemente vorgesehen sind, die mit Ihren einer Halterung abgewandten Endbereichen einen Offset zueinander aufweisen. Dies führt beispielsweise bei einer Ausführung der Dichtelemente als Bürsten dazu, dass bei einer entsprechenden Beladung der Vorrichtung lediglich Bürsten des eine größere Erstreckung aufweisenden Dichtelements v-förmig durch die Leitung, das Rohr oder dergleichen verformt werden und die andere Bürste gegenüber dem unbeladenen Zustand unverändert mit einer großen Dichtwirkung verbleibt.

Bei einer vorteilhaften Ausführung der Erfindung ist es vorgesehen, dass die erste Dichteinrichtung und die zweite Dichteinrichtung als Schaumstoffelement ausgeführt sind. Materialeigenschaften des Schaumstoffs können derart gewählt werden, dass eine besonders gute Abdichtung sowohl in unbeladenem als auch in beladenem Zustand der Vorrichtung erzielt ist. Es kann auch vorgesehen sein, dass der Schaumstoff intumeszierende Eigenschaften aufweist.

Die dritte Dichteinrichtung und/oder die vierte Dichteinrichtung und/oder die fünfte Dichteinrichtung und/oder die sechste Dichteinrichtung bzw. die jeweiligen Dichtelemente können mit Lamellen, Bürsten, Borsten, Streifen, Bänder oder Schlauchelementen ausgeführt sein, wobei diese insbesondere jeweils eine Dichtebene bzw. Dichtfläche bilden. Die Dichtelemente sind vorzugsweise flexibel und/oder elastisch ausgeführt, wobei eine Breite der Dichtelemente vorzugsweise um ein Vielfaches kleiner als eine Länge der Dichtelemente in Erstreckungsrichtung der Dichtelemente und vorzugsweise auch um ein Vielfaches kleiner als durch die Vorrichtung geführte Leitungen, Rohre, Kabel oder dergleichen ist.

Die dritte Dichteinrichtung und/oder die vierte Dichteinrichtung und/oder die fünfte Dichteinrichtung und/oder die sechste Dichteinrichtung bzw. die jeweiligen Dichtelemente können mit Kunststoff, insbesondere Polyamid, Nylon oder Polyester, Kautschuk, beispielsweise Gummi oder EPDM, und/oder biologischem Material, insbesondere Pferdehaar oder Schweineborsten, ausgeführt sein.

Um eine weitere Verbesserung der Gasdichtigkeit zu erzielen, kann im Bereich der Öffnungen der Vorrichtung jeweils eine Dichtanordnung vorgesehen sein, die vergleichbar zu den dritten bis sechsten Dichteinrichtungen ausgeführt sein können und insbesondere jeweils einen kompletten Querschnitt der Vorrichtung in unbeladenem Zustand der Vorrichtung verschließen. Die jeweilige Dichtanordnung kann insbesondere mehrere Dichtelemente aufweisen, die insbesondere parallel zueinander angeordnet sind und sich in einer Hauptrichtung erstrecken. Darüber hinaus kann im Bereich jeder Öffnung auch eine weitere Dichtanordnungen vorgesehen sein, die insbesondere mit Dichtelementen ausgeführt sind, die sich in einer Hauptrichtung erstrecken, die gegenüber der Dichtelement der Dichtanordnung einen Winkel aufweisen und vorzugsweise einen Winkel von etwa 90° aufweisen.

Um in einem Brandfall eine sichere Verschließung der Vorrichtung zu erzielen und einen Übertritt von Flammen zwischen den Öffnungen möglichst lange zu verhindern, kann wenigstens ein intumeszierendes Element vorgesehen sein. Das intumeszierende Element kann ein separates, beispielsweise mit dem Gehäuse verbundenes Element sein. Wenn separate intumeszierende Elemente vorgesehen sind, können die Dichteinrichtungen vorteilhaft hinsichtlich der Materialauswahl dahingehend optimiert werden, dass eine möglichst gute Abdichtung gegen Gase und dergleichen erzielt ist. Alternativ oder zusätzlich hierzu kann auch eine Dichteinrichtung intumeszierende Eigenschaften aufweisen.

Weitere Vorteile ergeben sich aus der folgenden Figurenbeschreibung. In den Figuren sind Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Kurzbeschreibung der Zeichnungen

Ausführungsformen werden nachfolgend anhand der beigefügten Zeichnungen näher erläutert. In den Figuren sind gleiche und gleichartige Komponenten mit gleichen Bezugszeichen beziffert.

Es zeigen:
- Fig. 1: eine Schnittansicht einer unbeladenen Vorrichtung zur Durchführung von Leitungen, Rohren und/oder Kabeln durch einen Gebäudeteil mit einem Durchlasskanal, wobei die Vorrichtung mit zwei miteinander in Wirkverbindung bringbaren Teilen ausgeführt ist, und wobei die Vorrichtung neben zwei gebogen ausgeführten Dichteinrichtungen mehrere jeweils mit diesen Dichteinrichtungen verbundene Dichteinrichtungen aufweist;
- Fig. 2: eine Schnittansicht der Vorrichtung gemäß Fig. 1, wobei die Vorrichtung in einem beladenen Zustand mit einer durch die Vorrichtung geführten Leitung gezeigt ist;
- Fig. 3: eine Schnittansicht eines Teils der Vorrichtung gemäß Fig. 1 und Fig. 2;
- Fig. 4: eine Schnittansicht eines Teils einer alternativ ausgeführten Vorrichtung, bei der eine Dichteinrichtung mittels einer Halteeinrichtung an einer Gehäusewand angeordnet ist;
- Fig. 5: eine Schnittansicht eines Teils einer weiteren alternativ ausgeführten Vorrichtung, bei der die Dichteinrichtung mit umgebogenen Dichtelementen ausgeführt ist;
- Fig. 6: eine Schnittansicht eines Teils einer weiteren alternativ ausgeführten Vorrichtung, bei der im Bereich einer Halteeinrichtung zwei jeweils einen Winkel zueinander aufweisende Dichteinrichtungen angeordnet sind;
- Fig. 7: eine vereinfachte Darstellung einer Dichteinrichtung in Alleinstellung; und
- Fig. 8: eine vereinfachte Darstellung einer alternativ ausgeführten Dichteinrichtung in Alleinstellung.

### Beschreibung von Ausführungsformen

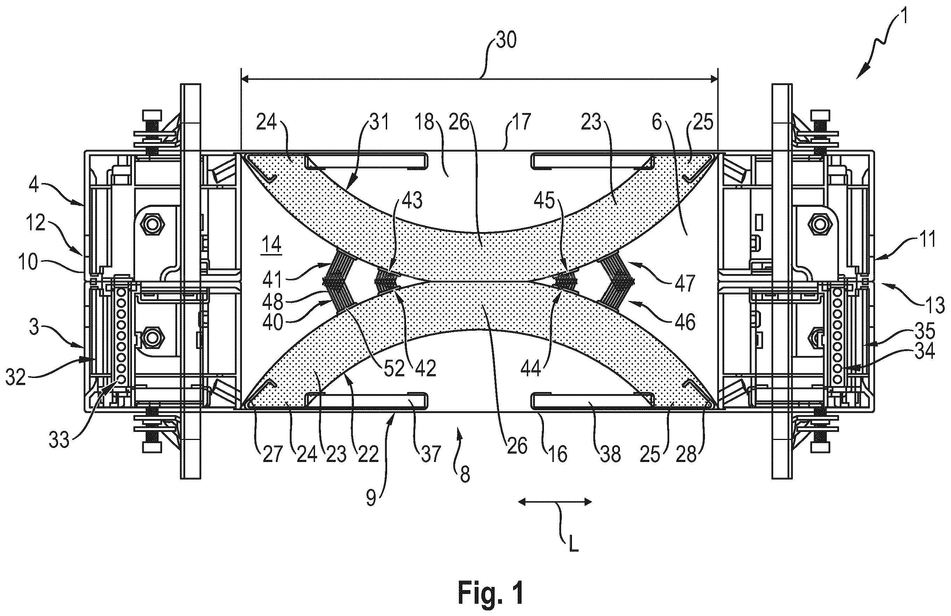

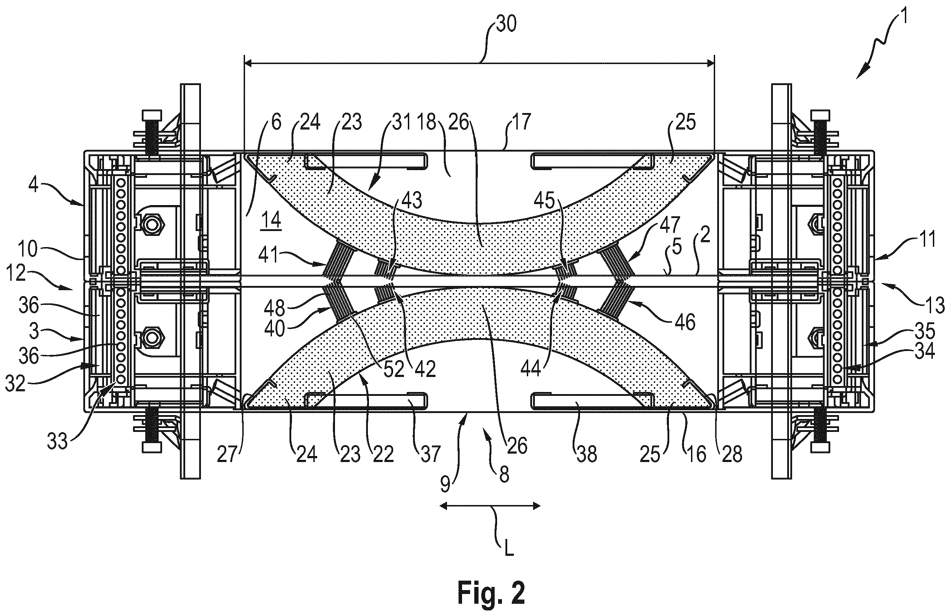

Fig. 1 bis Fig. 3 zeigen eine Vorrichtung 1 zur Durchführung von einer oder mehrerer Leitungen, Rohre, Kabel oder dergleichen, wie beispielsweise Stromleitungen, Wasserleitungen, Gasleitungen und dergleichen, durch einen Gebäudeteil, wie z. B. eine Gebäudewand, eine Decke und einen Boden.

Die Vorrichtung 1 erfordert keine manuelle Öffnung bzw. Schließung, um Leitungen oder dergleichen durch die Vorrichtung 1 zu führen. Diese können vielmehr ohne weitere Maßnahmen durch die Vorrichtung 1 geführt werden.

Die Vorrichtung 1 ist vorliegend mit zwei jeweils einen im Wesentlichen U-förmigen Querschnitt aufweisenden Teilen 3, 4 ausgeführt, die gemäß Fig. 1 lösbar aneinander anordenbar sind. Der erste Teil 3 und der zweite Teil 4 sind im Wesentlichen identisch zueinander ausgeführt. In miteinander verbundenen Zustand der Teile 3, 4 wird von der Vorrichtung 1 ein in Längsrichtung L verlaufender axialer Durchlasskanal 6 gebildet, der sich von einem ersten axialen Ende 10 bis zu einem zweiten axialen Ende 11 erstreckt und zumindest im Bereich der Enden 10, 11 eine für Leitungen oder dergleichen durchgängige Öffnung 12, 13 aufweist.

Bei alternativen Ausführungen kann die Vorrichtung auch einteilig ausgeführt sein.

Die Vorrichtung 1 weist ein Gehäuse 8 mit einer Gehäusewand 9 auf, wobei die Gehäusewand den axialen Durchlasskanal 6 bildet und einen Innenraum 14 der Vorrichtung 1 begrenzt. Das Gehäuse 8 weist vorliegend einen im Wesentlichen rechteckigen Querschnitt auf, der in montiertem Zustand der Vorrichtung 1 durch vier Wände 16, 17, 18 gebildet ist. Eine erste Wand 16 liegt dabei einer zweiten Wand 17 gegen. Die jeweils aus einem Wandstück des ersten Teils 3 und einem Wandstück des zweiten Teils 4 gebildeten weiteren Wände 18 sind wiederum einander gegenüberliegend und verbinden die Wände 16 und 17.

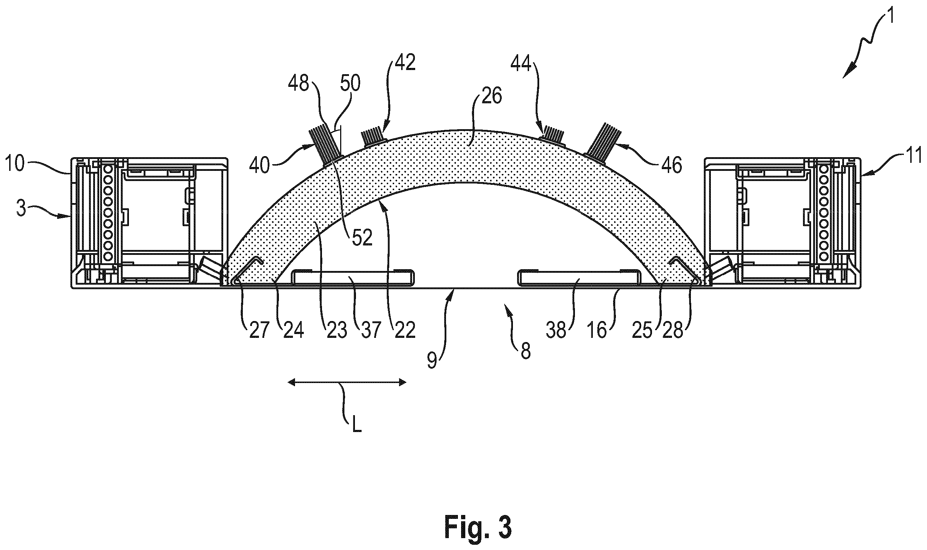

Da der erste Teil 3 und der zweite Teil 4 im Wesentlichen vergleichbar zueinander ausgeführt sind, wird im Folgenden der in Fig. 3 in Alleinstellung gezeigte erste Teil 3 stellvertretend für den zweiten Teil 4 beschreiben.

Der erste Teil 3 weist eine erste Dichteinrichtung 22 auf, die hier mit einem plattenförmigen Schaumstoffelement 23 ausgeführt ist. Das plattenförmige Schaumstoffelement 23 ist quer zur Längsrichtung L gebogen, so dass ein erster Endbereich 24 des plattenförmigen Schaumstoffelements 23 und ein zweiter, dem ersten Endbereich 24 gegenüberliegender Endbereich 25 des plattenförmigen Schaumstoffelements 23 jeweils im Bereich der ersten Wand 16 angeordnet sind. Hierzu ist jeweils eine als Halteklammer 27 bzw. 28 ausgeführte Halteeinrichtung vorgesehen, mittels welcher die Endbereiche 24 und 25 des Schaumstoffelements 23 an der ersten Wand 16 festgelegt sind. Ein zwischen den Endbereichen 24 und 25 angeordneter mittlerer Bereich 26 des Schaumstoffelements 23 erstreckt sich in montiertem Zustand der Vorrichtung 1 ausgehend von der ersten Wand 16 in Richtung der zweiten Wand 17 in den Innenraum 14.

Neben der gezeigten Ausführung mit einem gebogenen plattenförmigen Schaumstoffelements kann es auch vorgesehen sein, dass ein bereits vorgeformtes Schaumstoffelement zum Einsatz kommt, welches beispielsweise eine vergleichbare gebogene Form wie das Schaumstoffelement 23 aufweisen kann oder trapezartig ausgeführt sein kann.

Vorliegend sind in einem Erstreckungsbereich 30 des Schaumstoffelements 23 in Längsrichtung L zwischen den Endbereichen 24 und 25 zwei intumeszierende Elemente 37, 38 mit der ersten Wand 16 verbunden, die in einem Brandfall für ein Verschließen des Innenraums 14 sorgen sollen. Alternativ oder zusätzlich hierzu können auch weitere intumeszierende Elemente, beispielsweise in den axialen Endbereichen 10, 11 der Vorrichtung 1 angeordnet sein.

Vorliegend entspricht der Erstreckungsbereich 30 des Schaumstoffelements 23 des ersten Teils 3 in Längsrichtung L einem Erstreckungsbereich 30 des Schaumstoffelements 23 des zweiten Teils 4, so dass der gemeinsame Erstreckungsbereich 30 in Längsrichtung L den einzelnen Erstreckungsbereichen 30 entspricht.

Bei alternativen Ausführungen können sich die Erstreckungsbereiche der Schaumstoffelemente der einzelnen Teile voneinander unterscheiden, wobei ein gemeinsamer Erstreckungsbereich durch eine Schnittmenge der Erstreckungsbereiche der einzelnen Schaumstoffelemente in Längsrichtung L definiert ist.

Wie in Fig. 1 bis Fig. 3 vereinfacht ersichtlich ist, sind im Bereich der axialen Enden 10, 11 der Vorrichtung 1 jeweils zwei Dichtanordnungen 32, 33, 34, 35 vorgesehen, die hier jeweils eine senkrecht zu der Längsrichtung L stehende Dichtebene bilden und die jeweils mit einer Vielzahl von einander unmittelbar benachbarten, länglich ausgeführten Dichtelemente 26 ausgeführt sind.

Die Dichtelemente 26 weisen vorliegend einen im Wesentlichen kreisförmigen Querschnitt auf, sind flexibel und elastisch ausgeführt und weisen eine Erstreckung in ihrer Längsrichtung auf, die um ein Vielfaches größer als der Querschnitt der Dichtelemente 26 ist. Die Dichtelemente 26 sind hier als elastische Lamellen mit einer Kunststofffaser aus Polypropylen oder Polyethylen ausgeführt, können bei alternativen Ausführungen aber auch als Bürsten, Borsten, Streifen, Bänder, Schlauchelemente oder dergleichen ausgeführt sein und andere Materialien, wie beispielsweise Metall, Kautschuk, biologische Materialien oder dergleichen aufweisen.

Die Dichtelemente 26 können auch mit Gewebe, Gelege oder Papiermaterialien ausgeführt sein, die flexibel sind, sich gut an einer Mantelfläche einer durch die Vorrichtung 1 geführten Leitung oder dergleichen anlegen können und möglichst eine elastische Kraft auf die Mantelfläche ausüben, um einen möglichst dichten Verschluss im Bereich um die Mantelfläche der Leitung zu gewährleisten. Die Dichtelemente 26 können weiterhin ein intumeszierendes Material aufweisen und beispielsweise mit einem intumeszierenden Material beschichtet sein oder ein intumeszierendes Material umschließen, und insbesondere ein mit intumeszierendem Material versehenes Papier umfassen.

Die Dichtelemente 26 der ersten Dichtanordnung 32 verlaufen dabei senkrecht zu den Dichtelementen 26 der zweiten Dichtanordnung 33. Analog hierzu sind die Dichtelemente 26 der dritten Dichtanordnung 34 und der vierten Dichtanordnung 35 ausgeführt, die im Bereich des zweiten axialen Endes 11 der Vorrichtung 1 angeordnet sind.

Wird eine Leitung, ein Rohr, ein Kabel oder dergleichen durch die Vorrichtung 1 geführt, werden die Dichtelemente 26 der Dichtanordnungen 32, 33, 34, 35 derart umgebogen, dass diese an einer Mantelfläche 5 einer durch die Vorrichtung 1 geführten Leitung 2 anliegen und hierdurch gegen einen Durchtritt von Brandgasen und Rauch abdichten und zudem eine gewisse Blickdichtigkeit erzielen.

In Fig. 1 bis Fig. 3 ist weiterhin eine dritte Dichteinrichtung 40, eine fünfte Dichteinrichtung 42, eine siebte Dichteinrichtung 44 und eine neunte Dichteinrichtung 46 ersichtlich, die jeweils an der ersten Dichteinrichtung 22 angeordnet sind. Analog hierzu sind an einer zweiten, an dem zweiten Teil 4 angeordneten Dichteinrichtung 31 eine vierte Dichteinrichtung 41, eine sechste Dichteinrichtung 43, eine achte Dichteinrichtung 45 und eine zehnte Dichteinrichtung 47 angeordnet. Sämtliche Dichteinrichtungen 40 bis 47 sind vorliegend vollständig innerhalb des gemeinsamen Erstreckungsbereichs 30 angeordnet.

Im Folgenden werden die dem Teil 3 zugeordneten Dichteinrichtungen 40, 42, 44, 46 stellvertretend für die dem Teil 4 zugeordneten Dichteinrichtungen 41, 43, 45, 47 beschrieben.

Die Dichteinrichtungen 40, 42, 44, 46 weisen vorliegend jeweils eine Vielzahl von Dichtelementen 48 auf, die vergleichbar zu den Dichtelementen 36 ausgeführt sein können. Bevorzugt sind die Dichtelemente 48 als Haare einer Bürste ausgeführt, wobei die Haare 48 der Bürste insbesondere in unbeladenem Zustand der Vorrichtung 1 insbesondere eine gemeinsame Längserstreckungsrichtung aufweisen. Vorliegend steht die Längserstreckungsrichtung der Haare nicht senkrecht zu der Längsrichtung L der Vorrichtung 1, sondern schließt mit einer quer zur Längsrichtung L stehenden Querebene Q einen Winkel 50 ein, der beispielsweise zwischen 0° und 45°, beispielsweise etwa 30° betragen kann.

Die Haare 48 der Bürsten sind hier jeweils an einem Haltelement 52 angeordnet, mittels dem die Bürsten direkt auf dem ersten Schaumstoffelement 23 angeordnet, insbesondere angeklebt sind. Vorliegend sind die dritte Dichteinrichtung 40 und die fünfte Dichteinrichtung 42 auf einer der ersten Öffnung 12 der Vorrichtung 1 zugewandten Seite des mittleren Bereichs 26 des Schaumstoffelements 23 und die siebte Dichteinrichtung 44 und die neunte Dichteinrichtung 46 auf einer der zweiten Öffnung 13 der Vorrichtung 1 zugewandten Seite des mittleren Bereichs 26 des Schaumstoffelements 23 angeordnet. Eine Länge der Dichtelemente 48 der fünften Dichteinrichtung 42 und der siebten Dichteinrichtung 44, die näher an dem mittleren Bereich 26 des Schaumstoffelements 23 angeordnet sind als die dritte Dichteinrichtung 40 und die neunte Dichteinrichtung 46 ist dabei kürzer als die Länge der Dichtelemente 48 der dritten Dichteinrichtung 40 und der neunten Dichteinrichtung 46.

Die Dichtelemente 48 der miteinander zusammenwirkenden Dichteinrichtungen 40 bis 47 des ersten Teils 3 und des zweiten Teils 4 greifen in montiertem Zustand der unbeladenen Vorrichtung 1 kammartig ineinander. Bei alternativen Ausführungen kann es auch vorgesehen sein, dass die Endbereiche der Dichtelemente der miteinander zusammenwirkenden Dichteinrichtungen in unbeladenem Zustand der Vorrichtung 1 bündig aufeinander aufstehen.

Wie in Fig. 1 näher ersichtlich ist, greifen in unbeladenem Zustand der Vorrichtung 1 miteinander zusammenwirkende Dichtelemente 48 der Dichteinrichtungen 40 bis 47 kammartig ineinander. Zudem liegen die mittleren Bereiche 26 der Schaumstoffelemente 23 über einen gewissen Erstreckungsbereich in Längsrichtung L der Vorrichtung 1 aneinander an, so dass in unbeladenem Zustand der Vorrichtung 1 eine gute Gasdichtigkeit erzielt ist.

Im beladenen Zustand gemäß Fig. 3 wird neben der Dichtanordnungen 32 bis 35 auch im Bereich der Schaumstoffelemente 23 und im Bereich der Dichteinrichtungen 40 bis 47 gegenüber der durch die Vorrichtung 1 geführten Leitung 2 abgedichtet und ein Gasdurchtritt sicher verhindert bzw. ist eine Gasdurchtritt stark reduziert.

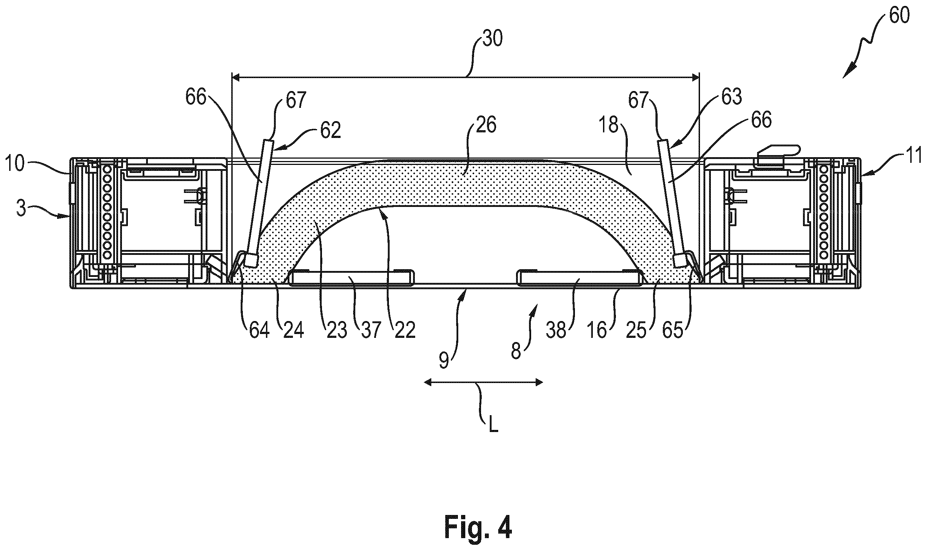

In Fig. 4 bis Fig. 6 sind alternativ ausgeführte Vorrichtung 60, 70 und 80 gezeigt, wobei im Folgenden lediglich auf die Unterschiede zu der Vorrichtung 1 eingegangen wird und ansonsten auf die Ausführungen zur Vorrichtung 1 verwiesen wird. Bei den Vorrichtungen 60, 70 und 80 ist in Fig. 4 bis Fig. 6 jeweils nur der erste Teil 3 ersichtlich.

Bei der Vorrichtung 60 gemäß Fig. 4 ist eine dritte Dichteinrichtung 62 und eine fünfte Dichteinrichtung 63 vorgesehen, welche jeweils in einem Endbereich 24 bzw. 25 der ersten Dichteinrichtung 22 angeordnet sind. Im Unterschied zu der Vorrichtung 1 sind die dritte Dichteinrichtung 62 und die fünfte Dichteinrichtung 63 nicht direkt mit dem Schaumstoffelement 23 verbunden, sondern an einer Halteeinrichtung 64 bzw. 65 angeordnet. Hierdurch ist eine besonders robuste Festlegung der Dichteinrichtungen 62 und 63 erzielt.

Die Halteeinrichtungen 64, 65 sind darüber hinaus vergleichbar zu den Halteklammern 27, 28 der Vorrichtung 1 zur Festlegung der Endbereiche 24, 25 des Schaumstoffelements 23 an der ersten Wand 16 des ersten Teils 3 ausgeführt. Darüber weisen die Halteeinrichtungen 64, 65 jeweils einen Bereich zur Anordnung der Dichtelemente 66 auf.

Die Dichtelemente 66 können dabei vergleichbar zu den Dichtelementen 48 ausgeführt sein, wobei sie durch ihre Anordnung in der Nähe des Endbereichs 24 bzw. 25 des Schaumstoffelements 23 eine größere Länge als die Dichtelemente 48 aufweisen. Die Dichtelemente 48 erstrecken sich mindestens bis zur Höhe des ersten Teils 3, insbesondere in den zweiten Teil 4 hinein, so dass ein sicheres Zusammenwirken und gutes Abdichten im Zusammenspiel mit den entsprechenden Dichtelementen des zweiten Teils 4 erzielt ist. Im Unterschied zu den Dichtelementen 48 sind die Dichtelemente 66 mit ihren der Halteeinrichtungen 64, 65 abgewandten Endbereichen weiter von der jeweiligen zugeordneten Öffnung 12 bzw. 13 abgewandt als die an der jeweiligen Halteeinrichtung 64, 65 angeordneten Bereiche der Dichtelemente 66. Die Dichtelemente 66 sind somit von der nächstgelegenen Öffnung 12 bzw. 13 aus betrachtet in Längsrichtung L ausgehend von ihrer gehäuseseitigen Festlegung in Richtung der jeweils anderen Öffnung 13 bzw. 12 geneigt.

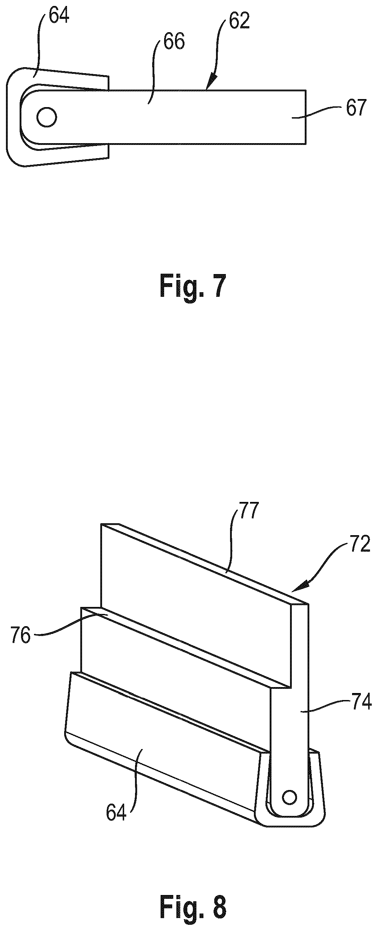

Sämtliche Dichteinrichtungen 40 bis 47, 62 und 63 können beispielsweise in der in Fig. 7 und Fig. 8 dargestellten Weise ausgeführt sein.

Die dritte Dichteinrichtung 62 ist näher in Fig. 7 ersichtlich. Die Dichtelemente 66 sind dabei beispielsweise mit Pferdehaaren ausgeführt, die im Bereich der Halteeinrichtung 64 derart umgebogen bzw. umgelenkt sind, dass sämtliche Endbereiche 67 der Dichtelemente 66 im Wesentlichen in einer Ebene liegen und eine nahezu flache Oberfläche bilden.

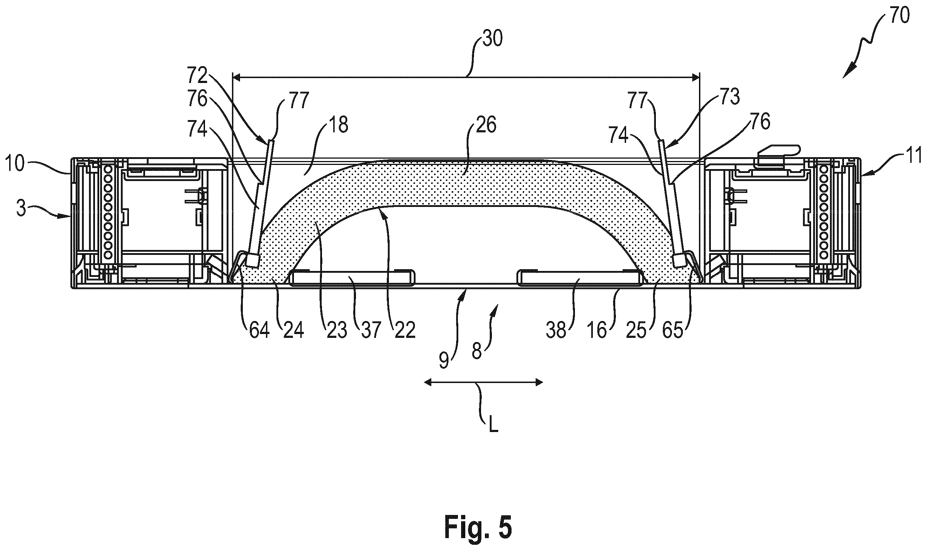

Bei der in Fig. 5 gezeigten Vorrichtung 70 sind die Dichteinrichtungen 72 und 73 gemäß der Detaildarstellung in Fig. 8 ausgeführt. Endbereiche 76, 77 der Dichtelemente 74 der Dichteinrichtungen 72, 73 weisen hierbei einen Offset zueinander auf und erstrecken sich somit ungleich weit von der Halteeinrichtung 64 bzw. 65. Hierdurch kann eine besonders gute Abdichtung des Durchlasskanals 6 bei geringer Beladung der Vorrichtung 70 erzielt werden.

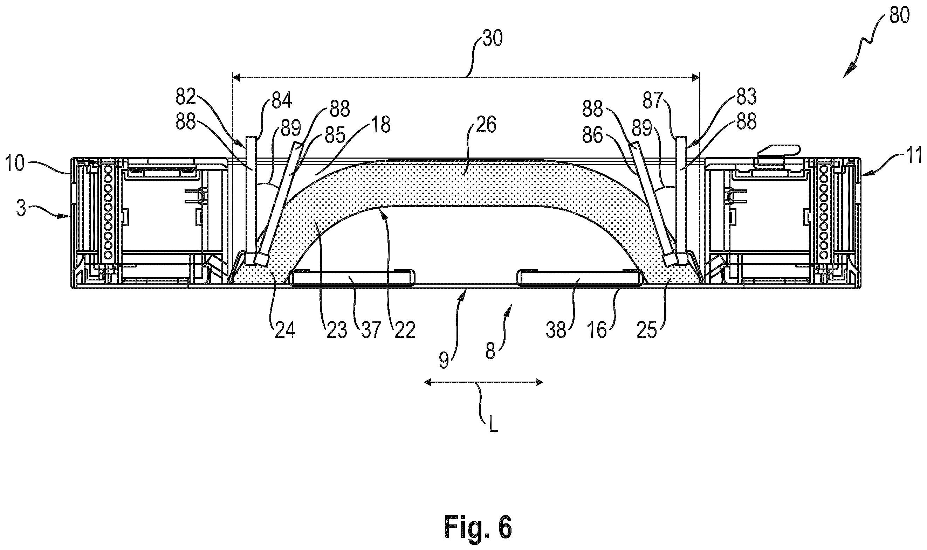

Bei der in Fig. 6 gezeigten Vorrichtung 80 ist eine alternativ zu der dritten Dichteinrichtung 62 gemäß Fig. 4 ausgeführte dritte Dichteinrichtung 82 und eine alternativ zu der fünften Dichteinrichtung 63 ausgebildete fünfte Dichteinrichtung 83 vorgesehen.

Die dritte Dichteinrichtung 82 und die fünfte Dichteinrichtung 83 unterscheiden sich von der dritten Dichteinrichtung 62 und der fünften Dichteinrichtung 63 dadurch, dass sie jeweils zwei Bürsten 84, 85 bzw. 86, 87 aufweisen, die jeweils mit der Halteeinrichtung 64 bzw. der Halteeinrichtung 65 verbunden sind. Die Bürsten 84 bis 87 weisen jeweils Dichtelemente 88 auf, die vergleichbar zu den Dichtelementen 66 ausgeführt sind, wobei eine Dichtebene bzw. Dichtfläche der Dichtelemente 88 der Bürste 84 bzw. 87 einen Winkel 89 gegenüber einer Dichtebene bzw. Dichtfläche der Dichtelemente 88 der Bürste 85 bzw. 86 aufweisen. Hierdurch wird eine verbesserte Abdichtung im Bereich von durch die Vorrichtung 80 geführten Leitungen und dergleichen erreicht.

Sämtliche Dichteinrichtungen 62, 63, 72, 73, 82, 83 der in Fig. 4 bis Fig. 6 gezeigten Vorrichtungen 60, 70, 80 sind vollständig in Längsrichtung L im gemeinsamen Erstreckungsbereich 30 angeordnet. Relevant für die Beurteilung, ob die jeweilige Dichteinrichtung 62, 63, 72, 73, 82, 83 im gemeinsamen Erstreckungsbereich 30 angeordnet ist, ist ausschließlich die jeweilige Dichteinrichtung 62, 63, 72, 73, 82, 83 ohne die jeweilige zur Anordnung vorgesehene Halteeinrichtung 64, 65, 74, 75.

Mit den oben näher beschriebenen Vorrichtungen 1, 60, 70, 80 ist eine signifikanter Luftströmung und somit auch ein Übertritt von Rauch und Gas von einer Seite der Vorrichtung 1, 60, 70, 80 zur anderen Seite der Vorrichtung 1, 60, 70, 80 durch den Durchlasskanal 6 sowohl in unbeladenem Zustand der Vorrichtung 1, 60, 70, 80 als auch in beladenem Zustand der Vorrichtung 1, 60, 70, 80 signifikant reduziert und darüber hinaus eine gute Blickdichtigkeit erzielt.

## Patentansprüche

1. Vorrichtung (1; 60; 70; 80) zur Durchführung von Leitungen (2), Rohren und/oder Kabeln durch einen Gebäudeteil, aufweisend ein Gehäuse (8) mit einer Gehäusewand (9), wobei das Gehäuse (8) einen von der Gehäusewand (9) begrenzten, in Längsrichtung (L) verlaufenden axialen Durchlasskanal (6) aufweist, der an gegenüberliegenden Enden (10, 11) jeweils eine Öffnung (12, 13) aufweist, wobei das Gehäuse (8) eine erste Wand (16) und eine der ersten Wand (16) gegenüberliegende zweite Wand (17) aufweist, wobei im Gehäuseinneren (14) eine erste Dichteinrichtung (22) mit einer gebogenen Form angeordnet ist, deren Endbereiche (24, 25) jeweils mit der ersten Wand (16) wirkverbunden sind und deren mittlerer Bereich (26) sich in Richtung der zweiten Wand (17) erstreckt, und wobei im Gehäuseinneren (14) eine zweite Dichteinrichtung (31) mit einer gebogenen Form angeordnet ist, deren Endbereiche (24, 25) mit der zweiten Wand (17) wirkverbunden sind und deren mittlerer Bereich (26) sich in Richtung der ersten Wand (16) erstreckt, und wobei die erste Dichteinrichtung (22) und die zweite Dichteinrichtung (31) einen gemeinsamen Erstreckungsbereich (30) in Längsrichtung (L) der Vorrichtung (1; 60; 70; 80) aufweisen, wobei im Bereich der Öffnungen (12, 13) der Vorrichtung (1) jeweils eine Dichtanordnung (32, 33, 34, 35) vorgesehen ist, und wobei die erste Dichteinrichtung (22) und die zweite Dichteinrichtung (31) mit den mittleren Bereichen (26) miteinander zusammenwirken, **dadurch gekennzeichnet, dass** der ersten Dichteinrichtung (22) im gemeinsamen Erstreckungsbereich (30) eine dritte Dichteinrichtung (40; 62; 72; 82) und der zweiten Dichteinrichtung (31) im gemeinsamen Erstreckungsbereich (30) eine vierte Dichteinrichtung (41) zugeordnet sind, und wobei die dritte Dichteinrichtung (40; 62; 72; 82) und die vierte Dichteinrichtung (41) miteinander zusammenwirken.

2. Vorrichtung nach Anspruch 1, **dadurch gekennzeichnet, dass** die dritte Dichteinrichtung (40; 62; 72; 82) und/oder die vierte Dichteinrichtung (41) mit der ersten Dichteinrichtung (22) bzw. mit der zweiten Dichteinrichtung (31) verbunden ist.

3. Vorrichtung nach Anspruch 2, **dadurch gekennzeichnet, dass** die dritte Dichteinrichtung (40; 62; 72; 82) und/oder die vierte Dichteinrichtung (41) mittels einer Klebeverbindung oder mittels einer Schweißverbindung mit der ersten Dichteinrichtung (22) bzw. mit der zweiten Dichteinrichtung (31) verbunden ist.

4. Vorrichtung nach einem der vorherigen Ansprüche, **dadurch gekennzeichnet, dass** die dritte Dichteinrichtung (40; 62; 72; 82) und/oder die vierte Dichteinrichtung (41) mittels einer Halteeinrichtung (64, 65) mit der ersten Wand (16) bzw. mit der zweiten Wand (17) verbunden ist.

5. Vorrichtung nach Anspruch 4, **dadurch gekennzeichnet, dass** die Halteeinrichtung (64, 65) zur Festlegung eines Endbereichs (24, 25) der ersten Dichteinrichtung (22) bzw. der zweiten Dichteinrichtung (31) an der ersten Wand (16) bzw. zweiten Wand (17) ausgeführt ist.

6. Vorrichtung nach einem der vorherigen Ansprüche, **dadurch gekennzeichnet, dass** der ersten Dichteinrichtung (22) im gemeinsamen Erstreckungsbereich (30) eine fünfte Dichteinrichtung (42; 63; 73; 83) und der zweiten Dichteinrichtung (31) im gemeinsamen Erstreckungsbereich (30) eine sechste Dichteinrichtung (43) zugeordnet sind, und wobei die fünfte Dichteinrichtung (42; 63; 73; 83) und die sechste Dichteinrichtung (43) miteinander zusammenwirken.

7. Vorrichtung nach einem der vorherigen Ansprüche, **dadurch gekennzeichnet, dass** die dritte Dichteinrichtung (82) und/oder die vierte Dichteinrichtung und/oder die fünfte Dichteinrichtung (83) und/oder die sechste Dichteinrichtung wenigstens zwei Dichtelemente (88) aufweist.

8. Vorrichtung nach einem der vorherigen Ansprüche, **dadurch gekennzeichnet, dass** die dritte Dichteinrichtung (40; 62; 72; 82) und/oder die vierte Dichteinrichtung (41) und/oder die fünfte Dichteinrichtung (42; 63; 73; 83) und/oder die sechste Dichteinrichtung (43) jeweils umgeschlagene Dichtelemente (48; 66; 74; 88) aufweist, wobei die beiden Endbereiche der Dichtelemente (48; 66; 74; 88) bündig zueinander angeordnet sind.

9. Vorrichtung nach einem der vorherigen Ansprüche, **dadurch gekennzeichnet, dass** die dritte Dichteinrichtung (40; 62; 72; 82) und/oder die vierte Dichteinrichtung (41) und/oder die fünfte Dichteinrichtung (42; 63; 73; 83) und/oder die sechste Dichteinrichtung (43) jeweils umgeschlagene Dichtelemente (74) aufweist, wobei die beiden Endbereiche (76, 77) der Dichtelemente (74) einen Offset zueinander aufweisen.

10. Vorrichtung nach einem der vorherigen Ansprüche, **dadurch gekennzeichnet, dass** die erste Dichteinrichtung (22) und die zweite Dichteinrichtung (31) als Schaumstoffelement (23) ausgeführt sind.

11. Vorrichtung nach einem der vorherigen Ansprüche, **dadurch gekennzeichnet, dass** die dritte Dichteinrichtung (40; 62; 72; 82) und/oder die vierte Dichteinrichtung (41) und/oder die fünfte Dichteinrichtung (42; 63; 73; 83) und/oder die sechste Dichteinrichtung (43) mit Lamellen, Bürsten, Borsten, Streifen, Bänder oder Schlauchelemente ausgeführt sind.

12. Vorrichtung nach einem der vorherigen Ansprüche, **dadurch gekennzeichnet, dass** die dritte Dichteinrichtung (40; 62; 72; 82) und/oder die vierte Dichteinrichtung (41) und/oder die fünfte Dichteinrichtung (42; 63; 73; 83) und/oder die sechste Dichteinrichtung (43) mit Kunststoff, insbesondere Polyamid, Nylon oder Polyester, Kautschuk und/oder biologischem Material, insbesondere Pferdehaar, ausgeführt sind.

13. Vorrichtung nach einem der vorhergehenden Ansprüche, **dadurch gekennzeichnet, dass** wenigstens ein intumeszierendes Element (37, 38) vorgesehen ist.

## Claims

1. A device (1; 60; 70; 80) for routing lines (2), pipes, and/or cables through a building part, having a housing (8) with a housing wall (9), wherein the housing (8) has an axial passage channel (6) which is delimited by the housing wall (9), extends in the longitudinal direction (L), and has an opening (12, 13) in each case at opposite ends (10, 11), wherein the housing (8) has a first wall (16) and a second wall (17) opposite the first wall (16), wherein a first sealing means (22) having a curved shape is arranged in the housing interior (14), the end regions (24, 25) of which first sealing means are in each case operatively connected to the first wall (16) and the central region (26) of which first sealing means extends in the direction of the second wall (17), and wherein a second sealing means (31) having a curved shape is arranged in the housing interior (14), the end regions (24, 25) of which second sealing means are operatively connected to the second wall (17) and the central region (26) of which second sealing means extends in the direction of the first wall (16), and wherein the first sealing means (22) and the second sealing means (31) have a common extension region (30) in the longitudinal direction (L) of the device (1; 60; 70; 80), wherein a sealing arrangement (32, 33, 34, 35) is provided in the region of the openings (12, 13) of the device (1) in each case and wherein the first sealing means (22) and the second sealing means (31) cooperate with one another by means of the central regions (26), **characterized in that** a third sealing means (40; 62; 72; 82) is assigned to the first sealing means (22) in the common extension region (30) and a fourth sealing means (41) is assigned to the second sealing means (31) in the common extension region (30), and wherein the third sealing means (40; 62; 72; 82) and the fourth sealing means (41) cooperate with one another.

2. The device according to claim 1, **characterized in that** the third sealing means (40; 62; 72; 82) and/or the fourth sealing means (41) is connected to the first sealing means (22) and/or to the second sealing means (31), respectively.

3. The device according to claim 2, **characterized in that** the third sealing means (40; 62; 72; 82) and/or the fourth sealing means (41) is preferably connected to the first sealing means (22) and/or to the second sealing means (31), respectively, by means of an adhesive connection or by means of a welded connection.

4. The device according to any of the preceding claims, **characterized in that** the third sealing means (40; 62; 72; 82) and/or the fourth sealing means (41) is connected to the first wall (16) and/or to the second wall (17), respectively, by a holding means (64, 65).

5. The device according to claim 4, **characterized in that** the holding means (64, 65) is designed to secure an end region (24, 25) of the first sealing means (22) and/or the second sealing means (31) to the first wall (16) and/or second wall (17), respectively.

6. The device according to any of the preceding claims, **characterized in that** a fifth sealing means (42; 63; 73; 83) is assigned to the first sealing means (22) in the common extension region (30) and a sixth sealing means (43) is assigned to the second sealing means (31) in the common extension region (30), and wherein the fifth sealing means (42; 63; 73; 83) and the sixth sealing means (43) cooperate with one another.

7. The device according to any of the preceding claims, **characterized in that** the third sealing means (82) and/or the fourth sealing means and/or the fifth sealing means (83) and/or the sixth sealing means has at least two sealing elements (88).

8. The device according to any of the preceding claims, **characterized in that** the third sealing means (40; 62; 72; 82) and/or the fourth sealing means (41) and/or the fifth sealing means (42; 63; 73; 83) and/or the sixth sealing means (43) each have inverted sealing elements (48; 66; 74; 88), wherein the two end regions of the sealing elements (48; 66; 74; 88) are flush with one another.

9. The device according to any of the preceding claims, **characterized in that** the third sealing means (40; 62; 72; 82) and/or the fourth sealing means (41) and/or the fifth sealing means (42; 63; 73; 83) and/or the sixth sealing means (43) each have inverted sealing elements (74), wherein the two end regions (76, 77) of the sealing elements (74) are offset with respect to one another.

10. The device according to any of the preceding claims, **characterized in that** the first sealing means (22) and the second sealing means (31) are designed as a foam element (23).

11. The device according to any of the preceding claims, **characterized in that** the third sealing means (40; 62; 72; 82) and/or the fourth sealing means (41) and/or the fifth sealing means (42; 63; 73; 83) and/or the sixth sealing means (43) have lamellae, brushes, bristles, strips, bands, or tube elements.

12. The device according to any of the preceding claims, **characterized in that** the third sealing means (40; 62; 72; 82) and/or the fourth sealing means (41) and/or the fifth sealing means (42; 63; 73; 83) and/or the sixth sealing means (43) comprise plastics material, in particular polyamide, nylon or polyester, rubber, and/or biological material, in particular horse hair.

13. The device according to any of the preceding claims, **characterized in that** at least one intumescent element (37, 38) is provided.

## Revendications

1. Dispositif (1 ; 60 ; 70 ; 80) pour le passage de conduites (2), de tubes et/ou de câbles à travers une partie de bâtiment, présentant un boîtier (8) comportant une paroi de boîtier (9), dans lequel le boîtier (8) présente un canal de passage (6) axial limité par la paroi de boîtier (9) et s'étendant dans la direction longitudinale (L), lequel canal de passage présente respectivement une ouverture (12, 13) au niveau de ses extrémités (10, 11) opposées, dans lequel le boîtier (8) présente une première paroi (16) et une seconde paroi (17) opposée à la première paroi (16), dans lequel un premier appareil d'étanchéité (22) comportant une forme incurvée est disposé à l'intérieur du boîtier (14) et ses zones d'extrémité (24, 25) sont respectivement en liaison active avec la première paroi (16) et sa zone centrale (26) s'étend en direction de la seconde paroi (17), et dans lequel un deuxième appareil d'étanchéité (31) comportant une forme incurvée est disposé à l'intérieur du boîtier (14) et ses zones d'extrémité (24, 25) sont en liaison active avec la seconde paroi (17) et sa zone centrale (26) s'étend en direction de la première paroi (16), et dans lequel le premier appareil d'étanchéité (22) et le deuxième appareil d'étanchéité (31) présentent une zone d'extension commune (30) dans la direction longitudinale (L) du dispositif (1 ; 60 ; 70 ; 80), dans lequel respectivement un agencement d'étanchéité (32, 33, 34, 35) est prévu dans la zone des ouvertures (12, 13) du dispositif (1), et dans lequel le premier appareil d'étanchéité (22) et le deuxième appareil d'étanchéité (31) coopèrent l'un avec l'autre avec les zones centrales (26), **caractérisé en ce qu'**un troisième appareil d'étanchéité (40 ; 62 ; 72 ; 82) est associé au premier appareil d'étanchéité (22) dans la zone d'extension commune (30) et un quatrième appareil d'étanchéité (41) est associé au deuxième appareil d'étanchéité (31) dans la zone d'extension commune (30), et dans lequel le troisième appareil d'étanchéité (40 ; 62 ; 72 ; 82) et le quatrième appareil d'étanchéité (41) coopèrent l'un avec l'autre.

2. Dispositif selon la revendication 1, **caractérisé en ce que** le troisième appareil d'étanchéité (40 ; 62 ; 72 ; 82) et/ou le quatrième appareil d'étanchéité (41) sont reliés au premier appareil d'étanchéité (22) ou au deuxième appareil d'étanchéité (31).

3. Dispositif selon la revendication 2, **caractérisé en ce que** le troisième appareil d'étanchéité (40 ; 62 ; 72 ; 82) et/ou le quatrième appareil d'étanchéité (41) sont reliés au premier appareil d'étanchéité (22) ou au deuxième appareil d'étanchéité (31) au moyen d'une liaison adhésive ou au moyen d'une liaison soudée.

4. Dispositif selon l'une des revendications précédentes, **caractérisé en ce que** le troisième appareil d'étanchéité (40 ; 62 ; 72 ; 82) et/ou le quatrième appareil d'étanchéité (41) sont reliés à la première paroi (16) ou à la seconde paroi (17) au moyen d'un appareil de maintien (64, 65).

5. Dispositif selon la revendication 4, **caractérisé en ce que** l'appareil de maintien (64, 65) est conçu pour fixer une zone d'extrémité (24, 25) du premier appareil d'étanchéité (22) ou du deuxième appareil d'étanchéité (31) à la première paroi (16) ou à la seconde paroi (17).

6. Dispositif selon l'une des revendications précédentes, **caractérisé en ce qu'**un cinquième appareil d'étanchéité (42 ; 63 ; 73 ; 83) est associé au premier appareil d'étanchéité (22) dans la zone d'extension commune (30) et un sixième appareil d'étanchéité (43) est associé au deuxième appareil d'étanchéité (31) dans la zone d'extension commune (30), et dans lequel le cinquième appareil d'étanchéité (42 ; 63 ; 73 ; 83) et le sixième appareil d'étanchéité (43) coopèrent l'un avec l'autre.

7. Dispositif selon l'une des revendications précédentes, **caractérisé en ce que** le troisième appareil d'étanchéité (82) et/ou le quatrième appareil d'étanchéité et/ou le cinquième appareil d'étanchéité (83) et/ou le sixième appareil d'étanchéité présentent au moins deux éléments d'étanchéité (88).

8. Dispositif selon l'une des revendications précédentes, **caractérisé en ce que** le troisième appareil d'étanchéité (40 ; 62 ; 72 ; 82) et/ou le quatrième appareil d'étanchéité (41) et/ou le cinquième appareil d'étanchéité (42 ; 63 ; 73 ; 83) et/ou le sixième appareil d'étanchéité (43) présentent respectivement des éléments d'étanchéité (48 ; 66 ; 74 ; 88) repliés, dans lequel les deux zones d'extrémité des éléments d'étanchéité (48 ; 66 ; 74 ; 88) sont disposées à fleur l'une de l'autre.

9. Dispositif selon l'une des revendications précédentes, **caractérisé en ce que** le troisième appareil d'étanchéité (40 ; 62 ; 72 ; 82) et/ou le quatrième appareil d'étanchéité (41) et/ou le cinquième appareil d'étanchéité (42 ; 63 ; 73 ; 83) et/ou le sixième appareil d'étanchéité (43) présentent respectivement des éléments d'étanchéité (74) repliés, dans lequel les deux zones d'extrémité (76, 77) des éléments d'étanchéité (74) présentent un décalage l'une par rapport à l'autre.

10. Dispositif selon l'une des revendications précédentes, **caractérisé en ce que** le premier appareil d'étanchéité (22) et le deuxième appareil d'étanchéité (31) sont conçus sous forme d'éléments en mousse (23).

11. Dispositif selon l'une des revendications précédentes, **caractérisé en ce que** le troisième appareil d'étanchéité (40 ; 62 ; 72 ; 82) et/ou le quatrième appareil d'étanchéité (41) et/ou le cinquième appareil d'étanchéité (42 ; 63 ; 73 ; 83) et/ou le sixième appareil d'étanchéité (43) sont conçus avec des lamelles, brosses, poils, bandes, rubans ou éléments de tuyau.

12. Dispositif selon l'une des revendications précédentes, **caractérisé en ce que** le troisième appareil d'étanchéité (40 ; 62 ; 72 ; 82) et/ou le quatrième appareil d'étanchéité (41) et/ou le cinquième appareil d'étanchéité (42 ; 63 ; 73 ; 83) et/ou le sixième appareil d'étanchéité (43) sont conçus avec une matière plastique, en particulier du polyamide, du nylon ou du polyester, du caoutchouc et/ou une matière biologique, en particulier du crin de cheval.

13. Dispositif selon l'une des revendications précédentes, **caractérisé en ce qu'au** moins un élément intumescent (37, 38) est prévu.
